Europäisches Patentamt

(19) European Patent Office

Office européen des brevets

(11) Publication number: **0 265 390**
**A1**

## EUROPEAN PATENT APPLICATION

(21) Application number: **87830324.7**

(22) Date of filing: **09.09.87**

(51) Int. Cl.⁴: **B 60 B 33/00**

(30) Priority: **15.09.86 IT 5383086**

(43) Date of publication of application:
**27.04.88 Bulletin 88/17**

(84) Designated Contracting States:
**CH DE FR GB IT LI NL**

(71) Applicant: **TELLURE ROTA S.p.A.**
**Via Quattro Passi 15**
**I-41043 Formigine (Modena) (IT)**

(72) Inventor: **Lancellotti, Roberto**
**c/o Tellure Rota S.p.A. Via Quattro Passi 15**
**I-41043 Formigine (Modena) (IT)**

(74) Representative: **Jacobacci, Filippo et al**
**c/o JACOBACCI-CASETTA & PERANI S.p.A. Via Alfieri 17**
**I-10121 Torino (IT)**

(54) Support for a caster.

(57) A support for a caster has a fixing plate (12) and a forked support member (14a) for rotatably attaching the caster to the plate (12) with the interposition of two rings of balls (22, 32), the rings having different diameters and the balls (32) of one ring having a smaller diameter than the balls (22) of the other ring.

FIG. 2

**Description**

Support for a caster

The present invention relates to a support for a caster, comprising:
- a fixing plate intended to be fixed to the body of a movable structure, having on one of its faces a cylindrical appendage and a portion shaped so as to define an annular race radially outside the appendage;
- a fork member having a base facing the fixing plate and two parallel arms extending from the base in a direction away from the fixing plate, the arms being arranged to support a pin on which the caster is rotatably mounted, the base having a central hole and being shaped so as to define on a first one of its faces facing the fixing plate a first annular race facing the race of the fixing plate, and on a second one of its faces facing the arms a second annular race, the races being concentric with each other;
- an annular element having an annular race facing the second race of the fork member and fixed to the fixing plate by means of the cylindrical appendage of the fixing plate, the appendage extending through the central hole in the base of the fork member and the central hole in the annular element and being upset against the face of the annular element facing the arms;
- a first ring of balls interposed between the first race of the fork member and the race of the fixing plate, and
- a second ring of balls interposed between the race of the annular element and the second race of the fork member.

A support of this type is described in the Italian Patent No. 170254 which is referred to herein.

This support has shown fatigue-resistance problems and a not particularly easy assembly of the rings of balls.

The object of the present invention is to provide a support of the type indicated at the beginning of the description which does not have the above disadvantages and which is simple and economical to produce.

According to the invention, this object is achieved by virtue of the fact that the second ring of balls has a smaller diameter than the first ring of balls and by virtue of the fact that the balls of the second ring of balls have a smaller diameter than the balls of the first ring of balls.

By virtue of these characteristics, the strength of the support is considerably improved; furthermore, the assembly of the two rings of balls in the annular races is simplified by the fact that they have different diameters.

Further advantages and characteristics of the support according to the invention will become clear from the detailed description which follows, provided purely by way of non-limiting example, with reference to the appended drawings, in which:

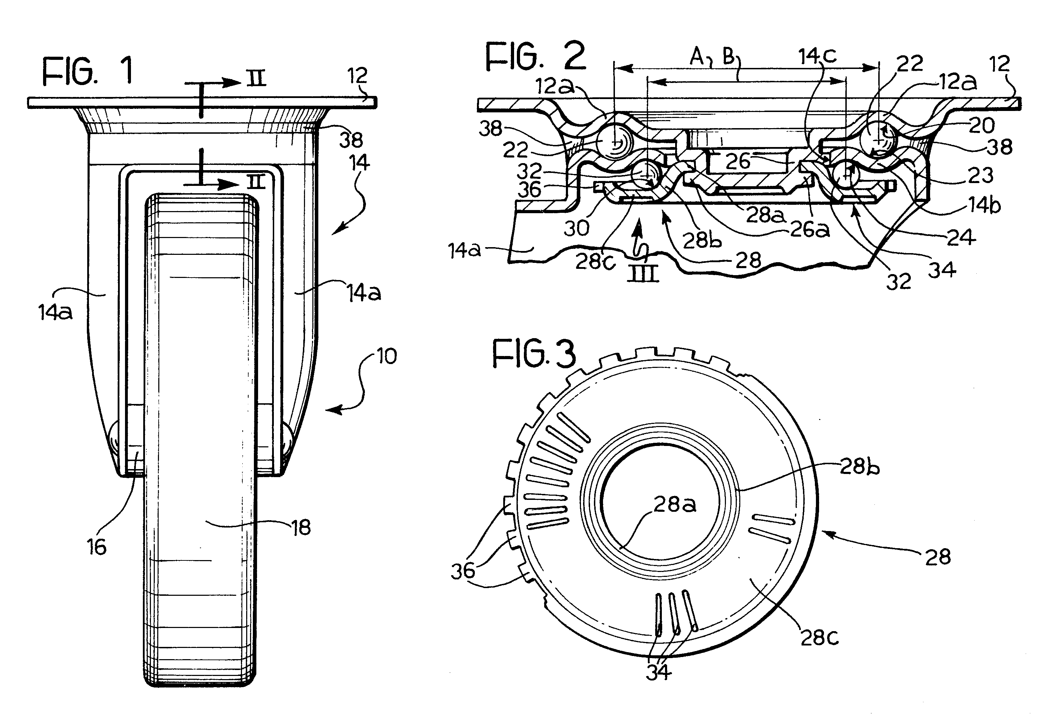

Figure 1 is a front view of the support,

Figure 2 is a section taken on the line II-II of Figure 1, and

Figure 3 is a detail of Figure 2.

With reference to the drawings, a support for a caster is generally indicated 10 and comprises an fixing plate 12 intended to be fixed to a movable structure, for example a trolley, and a fork 14 mounted for rotation about an axis X-X relative to the fixing plate 12 and provided with parallel arms 14a to the free ends of which is fixed a pin 16 rotatably supporting a wheel 18.

The fixing plate 12 has a shaped portion 12a defining an annular race 20 for a ring of balls 22. In a similar manner, the fork 14 has a base 14b shaped so as to define a first annular race 23 facing the race 20 of the fixing plate 12, and a second annular race 24 arranged radially inside the first race 23 and facing the arms 14a of the fork 14.

The base 14b of the fork 14 has a central hole 14c in which there is inserted with clearance a central cylindrical appendage 26 of the fixing plate 12, provided with a portion 26a rivetted onto a shaped ring 28. This ring comprises a radially inner portion 28a fixed to the appendage 26, a conical connecting portion 28b, and a flat portion 28c; in its connecting region between the conical portion 28b and the flat portion 28c, the ring 28 defines an annular race 30 which, together with the second race 24 of the fork 14, is intended to cooperate with a second ring of balls 32.

The first ring of balls 22 has a diameter A larger than the diameter B of the second ring of balls 32. Moreover, the balls of the first ring 22 have a larger diameter than the balls of the second ring 32.

The ring 28 has, in correspondence with its flat portion 28c and on its side facing the arms 14, a plurality of radial slots 34 and, in correspondence with the external edge of the ring 28, a plurality of radial teeth 36. The slots 34 and the peripheral teeth 36 are adapted to cooperate with a locking-braking device which is not illustrated as it does not fall within the scope of the present invention.

In order to protect the first ring of balls 22 from ingress of dust, etc., a sealing element 38 of plastics material is interposed between the base plate 12 and the rotating fork 14.

**Claims**

1. A support for a caster comprising:
- an fixing plate intended to be fixed to the body of a movable structure, having on one of its faces a cylindrical appendage and a portion shaped so as to define an annular race radially outside the appendage;
- a fork member having a base facing the fixing base and two parallel arms extending from the base in a direction away from the fixing plate, the arms being arranged to support a pin on which the caster is rotatably mounted, the base having a central hole and being shaped so as to define on a first one of its faces facing the fixing plate a first annular race facing the race of the fixing plate, and on a second one of its faces facing the arms a second annular race, the races being concentric with each other;

- an annular element having an annular race facing the second race of the fork member and fixed to the fixing plate by means of the cylindrical appendage of the fixing plate, the appendage extending through the central hole in the base of the fork member and the central hole in the annular element and being upset against the face of the annular element facing the arms;

- a first ring of balls interposed between the first race of the fork element and the race of the fixing plate; and

- a second ring of balls interposed between the race of the annular element and the second race of the fork member, characterised in that the second ring of balls (32) has a smaller diameter than the first ring of balls (22), and in that the balls (32) of the second ring of balls have a smaller diameter than the balls (22) of the first ring of balls.

2. A support according to Claim 1, characterised in that the first (23) and second (24) annular races of the base (14b) of the fork member (14) are substantially arranged in a same plane substantially parallel to the fixing plate (12).

3. A support according to Claim 1, characterised in that the annular element (28) has a plurality of radial slots (34) in one of its faces facing the arms (14), and in that the external edge of the annular element (28) has a plurality of radial teeth (36).

0265390

FIG. 1

II

12

38

14

14a

14a

10

16

18

FIG. 2

A  B

14c

22

12

12a

12a

38

22

32

36

30

28c

III

28

28b

28a

26a

20

23

14b

24

32  34

26

14a

FIG. 3

28b

28a

36

28

34

28c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 512 406 (WICKE)<br>* Page 8, lines 10-22; figure 1 *<br>--- | 1,2 | B 60 B 33/00 |
| Y | FR-A-2 262 222 (LEWIN)<br>* Page 3, line 27 - page 4, line 3; figure 1 *<br>--- | 1,2 | |
| A | US-A-1 736 110 (BEEMER)<br>* Whole document *<br>----- | 1,2 | |

TECHNICAL FIELDS SEARCHED (Int. Cl.4)

B 60 B
F 16 C

The present search report has been drawn up for all claims

| Place of search | Date of completion of the search | Examiner |
|---|---|---|
| THE HAGUE | 13-01-1988 | FOGLIA A. |